# EUROPEAN PATENT APPLICATION

(11) **EP 4 019 806 A1**
(43) Date of publication of application: **29.06.2022**
(21) Application number: 19941856.7
(22) Date of filing: 22.08.2019
(51) Int. Cl.: F16H 1/32, F16H 57/04

(54) **UNIT-TYPE WAVE GEAR DEVICE**

(71) Applicant: Harmonic Drive Systems Inc., Shinagawa-ku Tokyo 140-0013 (JP)
(72) Inventor: KANAYAMA, Naoki, Azumino-shi, Nagano 399-8305 (JP)
(74) Representative: Schmitt-Nilson Schraud Waibel Wohlfrom Patentanwälte Partnerschaft mbB
(86) International application number: PCT/JP2019/032887
(87) International publication number: WO 2021/033319

(57) **Abstract**

This unit-type strain wave gearing (1) is provided with a cross-roller bearing (5) that supports an internally toothed gear (2) and an externally toothed gear (3) in a relatively rotatable manner, wherein a meshing portion (7) between the two gears (2, 3) is lubricated by a grease. In the outer circumference of the externally toothed gear (3), a gap (8) is formed which communicates with the meshing portion (7) and a raceway groove (53) of the cross-roller bearing (5). A portion of the grease pressed out from the meshing portion (70) to the gap (8) flows out through a through-hole (10) formed in the internally toothed gear (2), and flows back to the meshing portion (7). The grease can be suppressed from leaking to the outside of the unit from an oil seal (9) of the cross-roller bearing (5).

## Description

### TECHNICAL FIELD

The present invention relates to a unit-type strain wave gearing provided with a bearing that supports a rigid internally toothed gear and a flexible externally toothed gear in a state allowing relative rotation, and more specifically relates to a unit-type strain wave gearing in which portions where the internally toothed gear and the externally toothed gear mesh are lubricated by a grease.

### BACKGROUND ART

Unit-type strain wave gearings provided with a rigid internally toothed gear, a flexible externally toothed gear, a cross-roller bearing that supports the two gears in a state allowing relative rotation, etc., are known in the prior art. Patent Documents 1 and 2 disclose strain wave gearings having this configuration.

In the strain wave gearing disclosed in Patent Document 1, a cross-roller bearing is disposed in a state of surrounding a cylindrical barrel part of an externally toothed gear having a "top hat" profile. An outer race of the cross-roller bearing is fastened to an annular boss formed on the outer peripheral edge of a diaphragm of the externally toothed gear, and an inner race of the cross-roller bearing is secured to an internally toothed gear. A prescribed gap is formed between the inner race of the cross-roller bearing and the cylindrical barrel part and diaphragm of the externally toothed gear so that these members do not interfere with each other. The gap communicates with portions where the internally toothed gear and the externally toothed gear mesh, and also communicates with a raceway between the inner and outer races of the cross-roller bearing. In the strain wave gearing disclosed in Patent Document 2, a cross-roller bearing is disposed in a state of surrounding a cylindrical barrel part of an externally toothed gear having a "cup" profile. A prescribed gap is formed between an inner race of the cross-roller bearing and the cylindrical barrel part and diaphragm of the externally toothed gear. The gap communicates with portions where an internally toothed gear and the externally toothed gear mesh, and also with a raceway in the cross-roller bearing.

Patent Document 3 proposes forming oil supply holes in an externally toothed gear in order to guide lubricating oil supplied from outside of the strain wave gearing into the strain wave gearing.

### PRIOR-ART DOCUMENTS

### PATENT DOCUMENTS

Patent Document 1: WO 2014/091522 A1
Patent Document 2: WO 2014/203293 A1
Patent Document 3: JP 4877804 B

### SUMMARY OF THE INVENTION

### PROBLEMS TO BE SOLVED BY THE INVENTION

In unit-type strain wave gearings, there are cases where portions where two gears mesh are lubricated by a grease with which the meshing portions are coated or filled. In the meshing portions, an external tooth formation portion on a cylindrical barrel part of an externally toothed gear is repeatedly flexed in the radial direction by a wave generator. Due to a pump effect produced by the external tooth formation portion repeatedly flexing in the radial direction, the grease is expelled from the meshing portions that have been lubricated by the grease. The expelled grease flows into a gap formed between the cylindrical barrel part of the externally toothed gear and an inner race of a cross-roller bearing.

The grease flowing into the gap flows through the gap into a raceway between the inner and outer races of the cross-roller bearing. A space between the inner and outer races facing the unit outer side in the cross-roller bearing is typically sealed by an oil seal. There is a concern that when the internal pressure in the raceway increases due to the grease flowing into the raceway, the grease will leak out from the oil seal.

In view of the foregoing, it is an object of the present invention to provide a unit-type strain wave gearing configured so as to prevent or suppress leakage of grease out of the unit from an oil seal attached to a bearing that supports an internally toothed gear and an externally toothed gear in a state allowing relative rotation.

### MEANS OF SOLVING THE PROBLEMS

A unit-type strain wave gearing that is the subject of the present invention is provided with:
a rigid internally toothed gear;
a flexible externally toothed gear that is disposed coaxially inside the internally toothed gear;
a bearing that supports the internally toothed gear and the externally toothed gear in a state allowing relative rotation;
a wave generator for generating relative rotation between the internally toothed gear and the externally toothed gear, the relative rotation corresponding to the difference between the numbers of teeth of the gears;
a grease with which portions where internal teeth of the internally toothed gear and external teeth of the externally toothed gear mesh are coated or filled; and
a gap formed in a state of surrounding the outer periphery of the externally toothed gear,
the externally toothed gear being provided with a cylindrical barrel part that is disposed coaxially inside the internally toothed gear and that is capable of flexing in the radial direction, and a disc-form diaphragm extending radially inward or outward from an inner end that is one end of the cylindrical barrel part,
the external teeth being formed on an outer peripheral surface portion on the side of the cylindrical barrel part where an open end that is the other end is located, the outer peripheral surface portion facing the internal teeth of the internally toothed gear,
the wave generator causing the cylindrical barrel part to flex in the radial direction and the external teeth to partially mesh with the internal teeth, the wave generator being configured such that the positions at which the external teeth mesh with the internal teeth are moved in the circumferential direction when the wave generator is rotationally driven, and
the gap being formed along the outer peripheral surface of the cylindrical barrel part of the externally toothed gear and communicating with the meshing portions and a raceway in the bearing.

The present invention provides a unit-type strain wave gearing having the configuration described above, characterized in that:
the internally toothed gear is provided with
an inner-side end surface portion positioned on the side that is nearer to the diaphragm of the externally toothed gear, and an outer-side end surface portion positioned on the side that is nearer to an open end of the externally toothed gear, the end surface portions sandwiching the meshing portions, and
through-holes extending from the inner-side end surface portion through to the outer-side end surface portion;
the inner-side end surface portion faces the gap; and
the through-holes communicate with the gap.

Due to a pump effect in the cylindrical barrel part of the externally toothed gear that is repeatedly flexed in the radial direction by the wave generator, the grease with which the portions where the two gears mesh are coated or filled is expelled in the direction of the diaphragm. The grease expelled from the meshing portions flows out into the gap formed along the outer peripheral surface of the cylindrical barrel part of the externally toothed gear.

Some of the grease expelled from the meshing portions to the gap flows out through the through-holes to the opposite sides of the meshing portions, therefore making it possible to reduce the amount of grease that flows through the gap into the raceway in the bearing. Because the amount of grease that reaches the raceway in the bearing can be reduced, it is possible to prevent or suppress leakage of the grease out of the unit via the oil seal sealing the raceway. The grease that has flowed out through the through-holes in the internally toothed gear toward the open end of the externally toothed gear can be caused to circulate back to the meshing portions.

The through-holes are preferably formed in the internally toothed gear at equal angular intervals or different angular intervals in the circumferential direction. The cross-section of the through-holes can be round, ellipsoidal, polygonal, or shaped otherwise.

### BRIEF DESCRIPTION OF THE DRAWINGS

FIG. 1 is a perspective view of a unit-type strain wave gearing to which the present invention is applied;
   and
FIG. 2 is a schematic cross-sectional view of the unit-type strain wave gearing in FIG. 1.

### MODE FOR CARRYING OUT THE INVENTION

An embodiment of a unit-type strain wave gearing to which the present invention is applied is described below with reference to the drawings. The present invention is not limited to the embodiment described below.

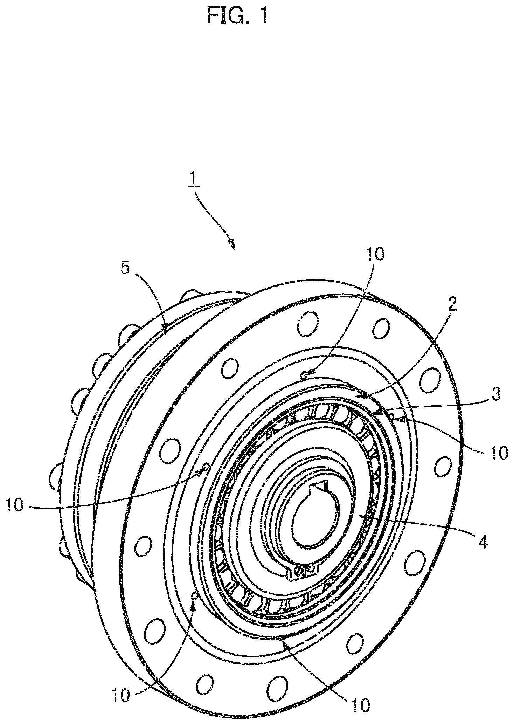

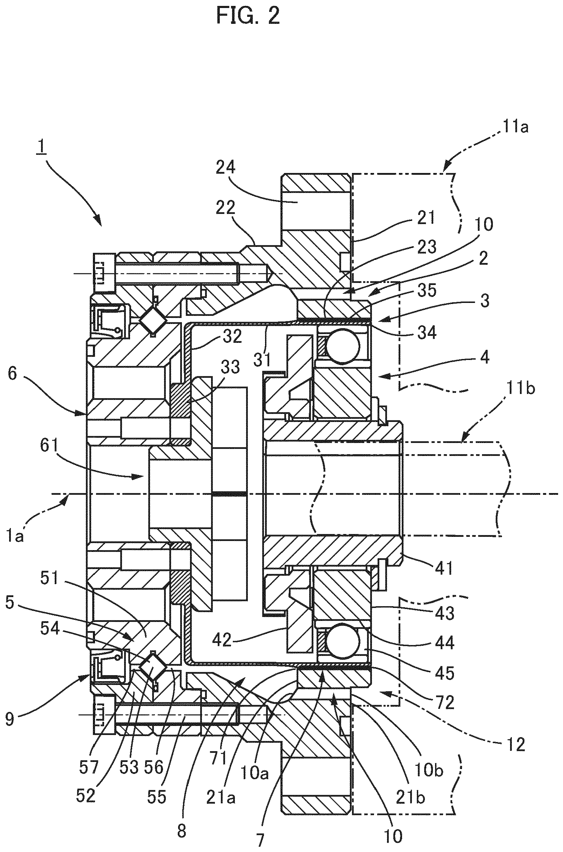

FIG. 1 is a perspective view of a unit-type strain wave gearing to which the present invention is applied, and FIG. 2 is a schematic cross-sectional view of the same. The unit-type strain wave gearing 1 (hereinbelow simply refers to the "strain wave gearing 1") is provided with a rigid internally toothed gear 2, a flexible externally toothed gear 3, a wave generator 4, a cross-roller bearing 5 that supports the internally toothed gear 2 and the externally toothed gear 3 in a state allowing relative rotation, and an output shaft 6 that outputs reduced-speed rotation.

The internally toothed gear 2 is provided with an annular gear body portion 21 that is rectangular in cross-section, and a housing portion 22 that protrudes annularly from the gear body portion 21 in a direction along a central axis 1a. Internal teeth 23 are formed on the circular inner peripheral surface of the gear body portion 21. Bolt holes 24 are formed in an outer-peripheral-side portion of the gear body portion 21 at prescribed angular intervals in the circumferential direction. The internally toothed gear 2 is, e.g., securely fastened to a motor flange 11a, as indicated by virtual lines.

The externally toothed gear 3 has a "cup" profile and is provided with a cylindrical barrel part 31 capable of flexing in the radial direction, a disc-form diaphragm 32 that extends radially inward from an inner end that is one end of the cylindrical barrel part 31, and a rigid disc-form boss 33 that is formed integrally with the inner peripheral edge of the diaphragm. External teeth 35 are formed on an outer peripheral surface portion on the side of the cylindrical barrel part 31 where an open end 34 that is the other end is located. The external teeth 35 are formed at positions facing the internal teeth 23 of the internally toothed gear 2 and are capable of meshing with the internal teeth 23. Portions 7 where the internal teeth 23 of the internally toothed gear 2 and the external teeth 35 of the externally toothed gear 3 mesh are coated or filled with a grease (not shown) as a lubricant.

The wave generator 4 is provided with a cylindrical hub 41 that is linked to a motor shaft 11b or other input rotating shaft shown by virtual lines, a rigid cam plate 43 that is mounted on the outer peripheral surface of the hub 41 with an Oldham coupling 42 interposed therebetween, and a wave bearing 45 that is mounted on an ellipsoidal outer peripheral surface 44 of the cam plate 43. The cam plate 43 is rotatably mounted, via the wave bearing 45, on the inner side of the portion of the cylindrical barrel part 31 of the externally toothed gear 3 where the external teeth 35 are formed, and the portion where the external teeth 35 are formed is flexed in an ellipsoidal shape. The external teeth 35 of the ellipsoidally flexed externally toothed gear 3 mesh with the internal teeth 23 at or near the two longitudinal ends of the ellipsoidal shape.

In the present example, the cross-roller bearing 5 is provided with an inner race 51 that is formed integrally with the output shaft 6, a segmented outer race 52, a raceway 53 that is rectangular in cross-section and is formed between the inner race 51 and the outer race 52, and a plurality of rollers 54 inserted into the raceway 53 so as to be capable of rolling. The outer race 52 is coaxially secured to the housing portion 22 of the internally toothed gear 2 by fastening bolts 55. Annular gaps 56, 57 are formed between the inner race 51 and the outer race 52 on both sides of the raceway 53. The outer-side annular gap 57 is sealed by an oil seal 9 and is formed such that a lubricant, etc., does not leak out of the unit. The bearing for supporting the internally toothed gear 2 and the externally toothed gear 3 in a state allowing relative rotation is not limited to a cross-roller bearing 5. Ball bearings or other bearings may be used, as shall be apparent.

The output shaft 6 with which the inner race 51 is integrally formed is secured coaxially to the boss 33 of the externally toothed gear 3. For example, the boss 33 and an output-side member (not shown) may be securely fastened in a coaxial manner sandwiching the output shaft 6 by using a fastening mechanism 61.

A gap 8 is formed in a state of surrounding the outer peripheral side of the externally toothed gear 3 so that locations other than the external teeth 35 of the externally toothed gear 3 that is radially flexed by the wave generator 4 do not interfere with the internally toothed gear 2 and the cross-roller bearing 5. The gap 8 is formed along the outer peripheral surface of the cylindrical barrel part 31 of the externally toothed gear 3. In the present example, the gap 8 is formed between the cylindrical barrel part 31 and the housing portion 22 that is formed integrally with the internally toothed gear 2 surrounding the cylindrical barrel part 31.

An end of the gap 8 on one side along the direction of the central axis 1a communicates with diaphragm-side inner end parts 71 of the meshing portions 7. The other end of the gap 8 communicates with the raceway 53 via the inner-side annular gap 56 between the inner race 51 and the outer race 52 of the cross-roller bearing 5.

Through-holes 10 for channeling grease are formed in the gear body portion 21 of the internally toothed gear 2, the through-holes 10 extending so as to pass through in the direction along the central axis 1a. The through-holes 10 are each provided with an inner-side open end 10a that communicates with the gap 8, and an outer-side open end 10b that opens into a unit outer-side space 12 in which outer end parts 72 on the side of the meshing portions 7 that is nearer to the open end 34 are exposed. In the present example, the inner-side open end 10a opens into an inner-side end surface portion 21a of the gear body portion 21, said inner-side end surface portion 21a facing the gap 8. The outer-side open end 10b opens into an outer-side end surface portion 21b that is on the opposite side of the gear body portion 21. Therefore, the meshing portions 7 are positioned between the inner-side end surface portion 21a and the outer-side end surface portion 21b.

Operations of the strain wave gearing 1 configured as described above are described next. The wave generator 4 is rotationally driven by a motor, etc. (not shown). Positions where the externally toothed gear 3 and the internally toothed gear 2 mesh move in the circumferential direction due to the rotation of the wave generator 4, and relative rotation that corresponds to the difference between the numbers of teeth of the gears 2, 3 is generated therebetween. For example, the internally toothed gear 2 is secured, and reduced-speed rotation is taken off from the externally toothed gear 3 via the output shaft 6.

When the wave generator 4 rotates, the cylindrical barrel part 31 is repeatedly flexed in the radial direction at the portions 7 where the externally toothed gear 3 meshes with the internally toothed gear 2. Due to this flexing, a pump effect in which the grease is expelled in the direction of the diaphragm 32 is produced at the meshing portions 7. The expelled grease flows through the gap 8 toward the raceway 53 in the cross-roller bearing 5.

The gap 8 communicates with the unit outer-side space 12 via the through-holes 10 formed in the internally toothed gear 2. Some of the grease flowing through the gap 8 flows toward the raceway 53, and the remainder flows out to the unit outer-side space 12 through the through-holes 10. The unit outer-side space 12 is, e.g., formed between the strain wave gearing 1 and the motor flange 11a, and the outer end parts 72 of the meshing portions 7 are exposed to the unit outer-side space 12. Grease that has leaked out into the unit outer-side space 12 circulates back into the meshing portions 7 from the outer end parts 72. Forming the through-holes 10 for channeling grease makes it possible to reduce the amount of grease that reaches the raceway 53 of the cross-roller bearing 5. Thus, it is possible to prevent or suppress leakage of the grease out of the unit via the oil seal 9.

### (Other embodiments)

The embodiment described above is one example of a case where the present invention is applied to a strain wave gearing provided with an externally toothed gear having a "cup" profile. The present invention can similarly be applied to a unit-type strain wave gearing provided with an externally toothed gear having a "top hat" profile. In this case as well, through-holes for channeling grease are formed in an internally toothed gear. Some of the grease that is expelled from portions where the externally toothed gear and the internally toothed gear mesh flows out through the through-holes toward a prescribed unit outer-side space. This makes it possible to prevent or suppress leakage of the grease out of the unit from an oil seal attached to a bearing that holds the internally toothed gear and the externally toothed gear in a state allowing relative rotation.

## Claims

1. A unit-type strain wave gearing comprising:
a rigid internally toothed gear;
a flexible externally toothed gear that is disposed coaxially inside the internally toothed gear;
a bearing that supports the internally toothed gear and the externally toothed gear in a state allowing relative rotation;
a wave generator for generating relative rotation between the internally toothed gear and the externally toothed gear, the relative rotation corresponding to a difference between numbers of teeth of the gears;
a grease with which portions where internal teeth of the internally toothed gear and external teeth of the externally toothed gear mesh are coated or filled; and
a gap formed in a state of surrounding an outer periphery of the externally toothed gear,
the externally toothed gear being provided with a cylindrical barrel part that is disposed coaxially inside the internally toothed gear and that is capable of flexing in a radial direction, and a disc-form diaphragm extending radially inward or outward from an inner end that is one end of the cylindrical barrel part,
the external teeth being formed on an outer peripheral surface portion on a side of the cylindrical barrel part where an open end that is the other end is located, the outer peripheral surface portion facing the internal teeth of the internally toothed gear,
the wave generator causing the cylindrical barrel part to flex in the radial direction and the external teeth to partially mesh with the internal teeth, the wave generator being configured such that positions at which the external teeth mesh with the internal teeth are moved in the circumferential direction when the wave generator is rotationally driven, and
the gap being formed along the outer peripheral surface of the cylindrical barrel part of the externally toothed gear and communicating with the meshing portions and a raceway of the bearing,
the unit-type strain wave gearing being **characterized in that**:
the internally toothed gear is provided with
an inner-side end surface portion positioned on a side that is nearer to the diaphragm of the externally toothed gear, and an outer-side end surface portion positioned on a side that is nearer to an open end of the externally toothed gear, the end surface portions sandwiching the meshing portions, and
through-holes extending from the inner-side end surface portion through to the outer-side end surface portion;
wherein the inner-side end surface portion faces the gap; and
the through-holes communicate with the gap.

2. The unit-type strain wave gearing according to claim 1, wherein
a plurality of the through-holes are formed at equal angular intervals or different angular intervals along the circumferential direction of the internally toothed gear.

3. The unit-type strain wave gearing according to claim 1, wherein
the cross-section of the through-holes is round, ellipsoidal or polygonal.

4. The unit-type strain wave gearing according to claim 1, wherein
the externally toothed gear is a cup profile in which the diaphragm extends radially inward from the inner end of the cylindrical barrel part,
the internally toothed gear is provided with a housing portion that protrudes annularly toward the bearing from a position on a side of the inner-side end portion and that surrounds coaxially the cylindrical barrel part of the externally toothed gear, and
the gap is an annular gap that is formed between the cylindrical barrel part and the housing portion.
